# EUROPÄISCHE PATENTANMELDUNG

(11) **EP 2 469 362 A2**
(43) Veröffentlichungstag der Anmeldung: **27.06.2012**
(21) Anmeldenummer: 11006221.3
(22) Anmeldetag: 28.07.2011
(51) Int. Cl.: G05B 13/02

(54) **Verfahren zur Optimierung von Windkraftanlagen Portfolios und verwandter Probleme**

(30) Priorität: 05.08.2010 DE 102010335529; 09.05.2011 DE 102011100905; 09.05.2011 DE 102011010090; 19.05.2011 DE 102011102065
(71) Anmelder: Morgenstern, Ingo, Prof. Dr., 66606 St. Wendel (DE)
(72) Erfinder: Morgenstern, Ingo, Prof. Dr., 66606 St. Wendel (DE)

(57) **Zusammenfassung**

Das beschriebene Verfahren ist auf Grund der erzielten Weltrekorde für das Kreisscheiben Problem vom amerikanischen Time Magazin unter die besten 50 Erfindungen der Welt des Jahres 2009 gewählt worden. Es gilt auch als eine der 10 besten "grünen" Erfindungen 2009. Im vorliegenden Patent wird das Verfahren beschrieben. Anwendungen aus dem Bereich Emeuerbare Energien, insbesondere Windenergie, folgen. Der Zusammenhang zwischen Windenergie und dem Krisenverhalten der Finanzmärkte wird herausgearbeitet. Ein Verfahren zur Früherkennung des Krisenverhaltens and den Finanzmärkten folgt. Ein Verfahren zur Erstellung optimaler Portfolios erfolgt in diesem Zusammenhang. Weitere daraus folgende Anwendungen aus dem Bereich Emeuerbare Energien werden beschrieben.

## Beschreibung

### 1.1 Stand der Forschung

In den letzten Jahrzehnten wurde eine Vielzahl von exakten und heuristischen Optimierungsverfahren zur Lösung von Optimierungsproblemen entwickelt. Ein Überblick über den Stand der Technik findet man in dem Monograph Stochastic Optimization von Johannes J. Schneider und Scott Kirkpatrick (Springer, ISBN 3540345590). Die im Patent erwähnten Verfahren Search Space Smoothing und Threshold Accepting sind in den Kapiteln 12 und 13 in Teil I dieses Buches ausführlich beschrieben, ihre Anwendung wird in den Kapiteln 9 und 10 im Teil II dieses Buches beschrieben.

### 1.2 Ziel der Erfindung

Die Erfindung zielt auf die Verbesserung der Behandlung von Optimierungsproblemen ab.

### 2 Beschreibung der Erfindung

### 2.1 Allgemeine Beschreibung

Hier stellen wir ein neues Verfahren vor, das sich am besten in Analogie zum sogenannten High-*T_{c}*-Glas beschreiben läßt [1]. Hier spielt nicht die Temperatur sondern das Magnetfeld die Rolle des Kontrollparameters. Mit zunehmendem Magnetfeld nimmt die Frustration im High-*T_{c}*-Glas zu. Durch langsames Erhöhen des Magnetfeldes von 0 aufwärts wird der optimale Zustand, d.h. der Grundzustand des Systems (Zustand minimaler Energie), erreicht. Dies geschieht allerdings nicht bei Temperatur 0, vielmehr ist eine geringe Temperatur notwendig. Dieser Umstand ist für die Qualität des Optimierungsverfahrens sehr wichtig. Die Rolle des Magnetfelds übernimmt zum Beispiel beim Search Space Smoothing-Verfahren der sogenannte Smoothing-Parameter. Die geringe Temperatur wird in der Praxis am besten durch einen geringen Threshold des Threshold Accepting-Verfahrens ersetzt. Der Threshold bleibt dabei konstant bzw. wird nur geringfügig verändert, im Gegensatz zum ursprünglichen Threshold Accepting-Verfahren. Damit können geringfügige Barrieren in der geglätteten Energielandschaft überwunden werden.

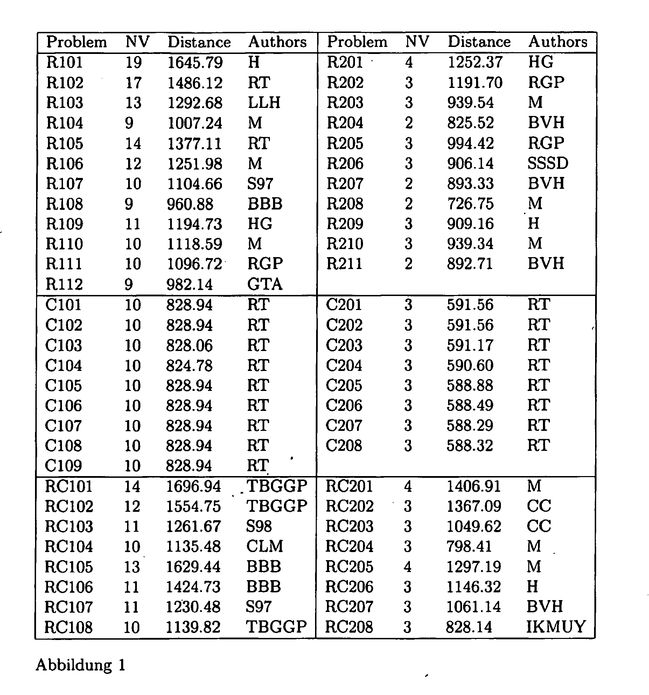

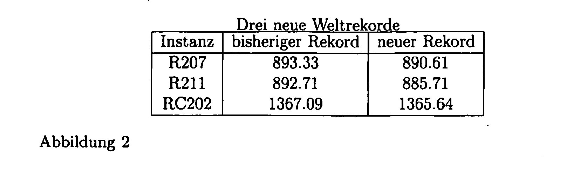

Das neue Verfahren liefert dadurch für komplexe Optimierungsprobleme die besten Resultate. Als Beispiel führen wir unsere Ergebnisse zu einem Benchmark-Datensatz für Tourenplanungsprobleme, der von Prof. Marius M. Solomon zusammengestellt wurde, an. Auf seiner Homepage http://w.cba.neu.edu/∼msolomon/heuristi.htm listet er die Werte für die bisher besten gefundenen Lösungen für diese Instanzen (siehe Abbildung 1 und dazugehörige Referenzen), die mit den verschiedensten Heuristiken erzielt wurden. Wir sind in der Lage, mit einem einzigen Verfahren, nämlich dem hier beschriebenen Verfahren, sämtliche Weltrekorde einzustellen und zudem drei neue Weltrekorde aufzustellen (siehe Abbildung 2).

### 2.2 Anwendung des Verfahrens auf Portfolio-Optimierung und Windkraftanlagen

Die Analogie zwischen dem Problem der optimalen Aufstellung von Windkraftanlagen und dem Problem der Optimierung von Aktienportfolios aus der Finanzbranche wurde im Patent DE 102008022060A1 aufgezeigt. Dem zeitlichen Verhalten der Aktienkurse entspricht dabei das der zeitaufgelösten Stromerzeugung. Korrelationen spielen eine entscheidende Rolle. Krisenverhalten tritt im Falle stark zunehmender Windgeschwindigkeiten auf. In der Natur treten in diesem Fall auch starke Korrelationen in den Windgeschwindigkeiten zwischen verschiedenen (potentiellen) Standorten auf. Ein starker Sturm ist kein isoliertes lokales Ereignis. Ähnlich haben sich die Aktienkurse zu Beginn und während der Finanzkrise verhalten. Der starke Abwärtstrend übte eine Sogwirkung aus. Im Abwärtstrend waren die Aktienkurse stark korreliert.

Am einfachsten lässt sich die Vorgehensweise am Beispiel von Aktienportfolios erklären. Der Zeitverlauf der Renditen einzelner Aktien bildet die Basis für die Vorgehensweise. Eine Veränderung der Portfolio- Konfiguration im Optimierungslauf führt zu einer Veränderung der Wahrscheinlichkeitsverteilung für die Gewinne bzw. Verluste für das Gesamtportfolio. Aus dieser Veränderung der Wahrscheinlichkeitsverteilung wird mit Hilfe der Kostenfunktion die Übergangswahrscheinlichkeit für das Optimierungsverfahren errechnet.

Im Falle der Kostenfunktion hat man hier weitaus größere Freiheiten als bei den bisher in der Praxis benutzten Verfahren. Die Qualität der Portfolios ist dadurch weitaus höher. Neben diesem verbesserten Verfahren zur Portfolio-Erstellung hat sich noch die bereits oben erwähnte Möglichkeit eines Früh-Indikators für Krisenverhalten ergeben.

Das physikalische Verhalten des Optimierungslaufes vor, während und nach der Krise ist unterschiedlich. In der Krise nehmen Korrelationen stark zu, die Frustration im System verändert sich stark. Vom Normal- Verhalten zum Krisen-Verhalten findet ein Phasen-Übergang statt. Dies entspricht dem Verhalten von Spingläsern mit veränderter Frustration. Phasen-Übergänge kündigen sich in der Physik durch das sogenannte Precursor- Verhalten an. D. h. im Bereich des Normal- Verhaltens des Systems zeigen sich bereits Anzeichen des Krisen-Verhaltens. Je mehr sich das System dem Phasenübergang nähert, desto stärker werden die Anzeichen. In der Praxis sind die für einen Phasenübergang relevanten physikalischen Größen zu berechnen: Spezifische Wärme, Ordnungs-Parameter, Suszeptibilitäten und verwandte Größen. Ergeben sich die aus der Physik bekannten Veränderungen, nähert sich das System dem Phasenübergang bzw. der Krise. Das Ende der Krise lässt sich analog bestimmen. Für diese Analyse können auch Kurzzeitdaten über einen relativ geringen Zeitraum verwendet werden, bis in den MilliSekunden-Bereich. Abschließend bleibt festzustellen, dass durch die ständige Beobachtung der für einen Phasenübergang relevanten physikalischen Größen eine frühere Erkennung von Krisen- Verhalten möglich ist. Die erfolgreiche Anwendung des Verfahrens lässt sich dadaurch erklären, dass ein Großteil der Finanzwirtschaft auf Portfolio-Erstellung beruht. Im physikalischen Sinne handelt es sich dabei um universelles Verhalten.

Im Falle von Windkraft- Anlagen ist ein analoges Vorgehen vorgesehen.
[1] I. Morgenstern, K. A. Müller und J. G. Bednorz, "Numerical Simulations of a High-Tc Superconductive Glass Model." Z. Phys. B-Condensed Matter 69, 33 (1987).

## Patentansprüche

1. Verfahren zur Behandlung von Optimierungsproblemen derart, dass ein Optimierungsverfahren A, das schrittweise die Energielandschaft des vorgegebenen Optimierungsproblems abändert, in Kombination mit einem weiteren Optimierungsverfahren B, mit dessen Hilfe geringfügige Barrieren in der veränderten Energielandschaft überwunden werden können, verwandt wird

2. Verfahren nach 1) derart, dass als Optimierungsverfahren A Search Space Smoothing verwandt wird

3. Verfahren nach 1) derart, dass als Optimierungsverfahren B Threshold Accepting verwandt wird, wobei der Threshold entweder konstant gehalten wird oder sich geringfügig ändert

4. Verfahren nach 1) derart, dass das Verfahren auf die Optimierung von Windkraftanlagen, die Portfolio-Optimierung, die Optimierung von Solaranlagen, die Optimierung von Tourenplanungsproblemen, die Optimierung von Produktionsplanungsproblemen, die Optimierung des Supply Chain Managements, die Optimierung des Enterprise Ressource Planing, die Optimierung von Personaleinsatzplanungsproblemen, die Optimierung von Stundenplanproblemen, die Optimierung von Raumbelegungen, die Optimierung von Bestrahlungsproblemen, die Optimierung von Beladungsproblemen, die Optimierung von Verteilungsproblemen, die Optimierung von Packproblemen, die Optimierung von Problemstellungen aus der Bioinformatik, die Optimierung von Problemstellungen aus der Kommunikationstechnik oder die Optimierung der Chip-Herstellung angewandt wird

5. Verfahren zur Optimierung von Windkraftanlagen oder Portfolios nach 4) derart, dass aus der Wahrscheinlichkeitsverteilung für Gewinne bzw. Verluste des Gesamtportfolios mit Hilfe der Kostenfunktion die Übergangswahrscheinlichkeiten für das Optimierungsverfahren nach 1) berechnet werden

6. Verfahren nach 1) derart, dass das Optimierungsproblem als physikalisches System betrachtet wird

7. Verfahren nach 1) und 6) derart, dass das Optimierungsproblem analog zum physikalischen System auf Phasenübergänge untersucht wird

8. Verfahren nach 1), 6) und 7) derart, dass Precursor-Effekte für den Phasenübergang als Indikator für späteres Krisenverhalten verwandt werden

9. Verfahren nach 1), 6), 7) und 8) derart, dass der Zeitpunkt des Phasenübergangs als Zeitpunkt für einen Crash angesehen wird

10. Verfahren nach 1), 6), 7), 8) und 9) derart, dass das Verfahren auf Probleme aus der Finanzwirtschaft angewandt wird
